# EUROPEAN PATENT SPECIFICATION

(11) **EP 4 346 303 B1**
(45) Date of publication and mention of the grant of the patent: **21.10.2026**
(21) Application number: 21949024.0
(22) Date of filing: 23.09.2021
(51) Int. Cl.: H04W 72/04, H04W 52/02, H04W 72/02, H04W 72/54

(54) **RESOURCE RESELECTION METHOD AND APPARATUS, DEVICE, AND STORAGE MEDIUM**
VERFAHREN UND VORRICHTUNG ZUR RESSOURCENNEUAUSWAHL, VORRICHTUNG UND SPEICHERMEDIUM
PROCÉDÉ ET APPAREIL DE RE-SÉLECTION DE RESSOURCES, DISPOSITIF ET SUPPORT DE STOCKAGE

(30) Priority: 05.07.2021 WO PCT/CN2021/104587
(43) Date of publication of application: 03.04.2024
(73) Proprietor: GUANGDONG OPPO MOBILE TELECOMMUNICATIONS CORP., LTD., Dongguan, Guangdong 523860 (CN)
(72) Inventor: DING, Yi, Dongguan, Guangdong 523860 (CN); ZHAO, Zhenshan, Dongguan, Guangdong 523860 (CN); ZHANG, Shichang, Dongguan, Guangdong 523860 (CN); LIN, Huei-Ming, Taipei 111 (TW); MA, Teng, Dongguan, Guangdong 523860 (CN)
(74) Representative: Taor, Simon Edward William
(86) International application number: PCT/CN2021/119916
(87) International publication number: WO 2023/279536

(56) References cited:
- CN-A- 111 567 121
- CN-A- 112 512 124
- US-A1- 2021 007 081
- US-A1- 2021 144 726
- HUAWEI ET AL: "Remaining details of sidelink resource allocation mode 2", vol. RAN WG1, no. E-meeting; 20200420 - 20200430, 11 April 2020 (2020-04-11), XP052341636, Retrieved from the Internet <URL:https://ftp.3gpp.org/tsg_ran/WG1_RL1/TSGR1_100b_e/Docs/R1-2001552.zip R1-2001552.docx> [retrieved on 20200411]
- INTEL CORPORATION: "Sidelink Power Saving Solutions", vol. RAN WG1, no. e-Meeting; 20210412 - 20210420, 7 April 2021 (2021-04-07), XP052177856, Retrieved from the Internet <URL:https://ftp.3gpp.org/tsg_ran/WG1_RL1/TSGR1_104b-e/Docs/R1-2103048.zip R1-2103048 Intel - eV2X Power Saving.docx> [retrieved on 20210407]
- FUJITSU: "Considerations on partial sensing and DRX in NR sidelink", vol. RAN WG1, no. e-Meeting; 20210412 - 20210420, 6 April 2021 (2021-04-06), XP051993189, Retrieved from the Internet <URL:https://ftp.3gpp.org/tsg_ran/WG1_RL1/TSGR1_104b-e/Docs/R1-2102719.zip R1-2102719 Considerations on partial sensing and DRX in NR sidelink.docx> [retrieved on 20210406]
- QUALCOMM INCORPORATED: "Sidelink Resource Allocation Mechanism for NR V2X", 3GPP DRAFT; R1-2000963, vol. RAN WG1, 15 February 2020 (2020-02-15), pages 1 - 11, XP051853538

## Description

### TECHNICAL FIELD

The embodiments of the present disclosure relate to the field of communication technology, and in particular, to a resource reselection method and apparatus, a device and a storage medium.

### BACKGROUND

In Sidelink (SL) communication, a terminal device can select transmission resources in a resource pool by way of sensing. When performing resource reselection, how the terminal device determines selected slots and sensing slots needs to be further studied. Related technologies are known from 3GPP DRAFT, R1-2001552, "Remaining details of sidelink resource allocation mode 2", HUAWEI ET AL; U.S. Appl. No. US2021/144726A1; 3GPP DRAFT, R1-2103048, "Sidelink Power Saving Solutions", INTEL CORPORATION; and 3GPP DRAFT, R1-2102719, "Considerations on partial sensing and DRX in NR sidelink".

### SUMMARY

The invention is defined by the independent claims. Embodiments of the present disclosure provide a resource reselection method and apparatus, a device and a storage medium. The technical solutions are as follows.

According to an aspect, the invention provides a resource reselection method comprising the features of claim 1.

Also disclosed is a resource reselection apparatus, and the apparatus includes:
a determination module, configured to determine target selected slots and target sensing slots;
exclusion module, configured to obtain a candidate resource set by performing resource exclusion on candidate resources in the target selected slots according to non-monitored slots and/or sensing result in the target sensing slots; and
a selection module, configured to select a second resource from the candidate resource set for replacement of a first resource that has been selected by the terminal device in a case where it is determined to reselect the first resource.

According to another aspect, the invention provides a terminal device comprising the features of claim 12.

Also disclosed is a computer-readable storage medium i, the storage medium has stored therein a computer program, and the computer program is configured to be executed by a processor to implement the above resource reselection method.

Also disclosed is a chip, the chip includes a programmable logic circuit and/or program instructions configured to implement the above resource reselection method when the chip is running.

Also disclosed is a computer program product or computer program. The computer program product or computer program includes computer instructions stored in a computer-readable storage medium from which a processor reads and executes the computer instructions to implement the above resource reselection method.

The technical solutions provided in the embodiments of the present disclosure may include the following beneficial effects.

When the terminal device performs partial sensing and performs semi-persistent transmission or periodic transmission, if it performs a pre-emption mechanism and determines that the resource is preempted, or it performs a re-evaluation mechanism and determines that there is resource collision, it triggers resource reselection to avoid the resource collision, which improves communication reliability.

### BRIEF DESCRIPTION OF THE DRAWINGS

FIG. 1 is a schematic diagram of a network architecture provided by an embodiment of the present disclosure;
FIG. 2 is a schematic diagram illustrating a physical layer structure for SL communication;
FIG. 3 is a schematic diagram illustrating time-frequency resource position reservation;
FIG. 4 is a schematic diagram illustrating full sensing and resource selection;
FIG. 5 is a schematic diagram illustrating a resource re-evaluation mechanism;
FIG. 6 is a schematic diagram illustrating a resource pre-emption mechanism;
FIG. 7 is a schematic diagram illustrating resource selection for partial sensing;
FIG. 8 is a schematic diagram illustrating a resource reselection process;
FIG. 9 is a flow chart of a resource reselection method provided by an embodiment of the present disclosure;
FIG. 10 is a schematic diagram of a resource reselection method provided by an embodiment of the present disclosure;
FIG. 11 is a schematic diagram of a resource reselection method provided by another embodiment of the present disclosure;
FIG. 12 is a block diagram of a resource reselection apparatus provided by an embodiment of the present disclosure; and
FIG. 13 is a structural block diagram of a terminal device provided by an embodiment of the present disclosure.

### DETAILED DESCRIPTION

In order to make the purpose, technical solution and advantages of the present disclosure clearer, embodiments of the present disclosure would be described in further detail below with reference to the accompanying drawings.

The network architecture and service scenarios described in the embodiments of the disclosure are intended to provide a clearer explanation of the technical solution in the embodiments of the present disclosure, and do not constitute a limitation to the technical solution of the embodiments of the present disclosure. Those skilled in the art would appreciate that the technical solutions provided by the embodiments of the present disclosure are also applicable to similar technical problems with the evolution of the network architecture and the emergence of new service scenarios.

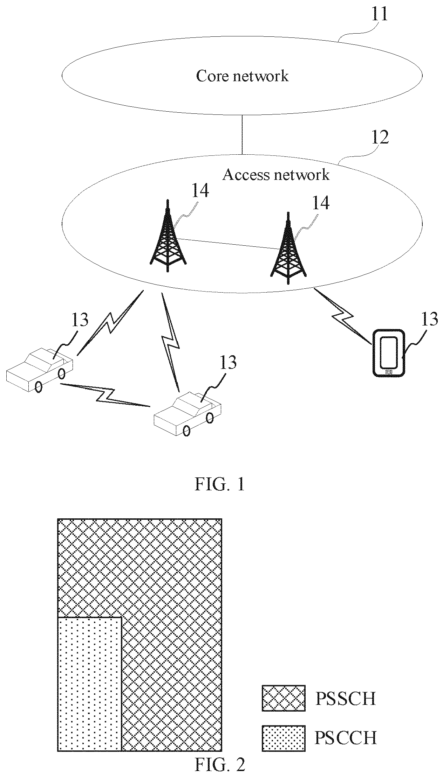

With reference to FIG. 1, a diagram of a network architecture according to an embodiment of the present disclosure is illustrated. The network architecture may include a core network 11, an access network 12, and a terminal device 13.

The core network 11 includes multiple core network devices. The function of the core network device is mainly to provide user connection, manage users, and complete bearing of services, and provides an interface to an external network by functioning as a bearer network. For example, a core network of a 5-th Generation (5G) New Radio (NR) system may include devices such as an Access and Mobility Management Function (AMF) entity, a User Plane Function (UPF) entity, and a Session Management Function (SMF) entity.

The access network 12 includes a certain number of access network devices 14. The access network in the 5G NR system may be called a New Generation-Radio Access Network (NG-RAN). The access network device 14 is an apparatus that is deployed in the access network 12 and is configured to provide a wireless communication function for the terminal device 13. The access network device 14 may include various forms of macro base stations, micro base stations, relay stations, access points, and the like. In systems using different radio access technologies, devices having the function of an access network device may have different names, for example, the devices may be called Next Generation Node B (gNodeB, a 5G base station) or Next Generation Node B (gNB, a 5G base station) in the 5G NR system. With the evolution of communication technologies, the name "access network device" may change. For convenience of description, in the embodiments of the present disclosure, the above-mentioned devices configured to provide a wireless communication function for the terminal device 13 are collectively referred to as the access network device.

There are usually multiple terminal devices 13. One or more terminal devices 13 may be distributed within a cell managed by each access network device 14. The terminal devices 13 may include various handheld devices, on-board devices, wearable devices, or computing devices that have the wireless communication function, or other processing devices connected to a wireless modem, and various forms of user equipment, Mobile Stations (MS), and the like. For convenience of description, the devices mentioned above are collectively called as terminal devices. The access network device 14 and the core network device communicate with each other via a certain air technology, such as an NG interface in the 5G NR system. The access network device 14 and the terminal device 13 communicate with each other via a certain air technology, such as a Uu interface.

The terminal devices 13 (such as an on-board device and another device (such as another on-board device, a mobile phone, a Road Side Unit (RUS) or the like)) may communicate with each other through a direct communication interface (such as a PCS interface). Correspondingly, the communication link established on the basis of the direct communication interface may be called a direct link or an SL. The SL transmission is the direct communication data transmission between terminal devices through the sidelink. Different from reception or transmission of the communication data through an access network device in a traditional cellular system, the SL transmission has the characteristics of short delay, low overhead, and the like, and is suitable for communication between two terminal devices that are in geographical proximity to each other (such as a on-board device and another peripheral device that are in geographical proximity to each other). It should be noted that in FIG. 1, the vehicle-to-vehicle communication in a vehicle to everything (V2X) scenario is taken only as an example, and the SL technology can be applied to various scenarios where the terminal devices communicate with each other directly. In other words, the terminal device in the present disclosure refers to any device that performs communication using the SL technology.

The "5G NR system" in the embodiments of the present disclosure may also be referred to as a 5G system or an NR system, but those skilled in the art can understand its meaning. The technical solutions described in the embodiments of the present disclosure may be applied to the 5G NR system, and may also be applied to a subsequent evolution system of the 5G NR system.

In the embodiments of the present disclosure, UE and the terminal device have the same meaning, and can be used interchangeably.

With respect to the SL transmission, 3rd Generation Partnership Project (3GPP) defines two transmission modes: Mode A and Mode B.

Mode A: transmission resources of a terminal device are assigned by the access network device (such as a base station). The terminal device performs transmission of the communication data on the sidelink according to the transmission resources assigned by the access network device. The access network device may allocate transmission resources for a single transmission to the terminal device, or may allocate the transmission resources for semi-persistent transmission to the terminal device.

Mode B: the terminal device autonomously selects transmission resources from a resource pool for transmission of the communication data. Specifically, the terminal device may select the transmission resources from the resource pool by way of sensing, or select the transmission resources from the resource pool by way of random selection.

The following mainly introduces the method for the terminal device to autonomously select resources for SL communication in the NR V2X system (i.e., in the above Mode B).

A structure of a physical layer for the SL communication in the NR V2X system is illustrated in FIG. 2. A Physical Sidelink Control Channel (PSCCH) is configured to carry first sidelink control information, and a Physical Sidelink Shared Channel (PSSCH) is configured to carry data and second sidelink control information. The PSCCH and the PSSCH are transmitted in the same slot. The first sidelink control information and the second sidelink control information may be two pieces of sidelink control information having different functions. For example, the first sidelink control information is carried in the PSCCH and includes fields related to resource sensing, so as to facilitate resource exclusion and resource selection by other terminal devices after performing decoding. Besides the data, the PSSCH also carries the second sidelink control information, and the second sidelink control information mainly includes fields related to data demodulation, so as to facilitate demodulation of data in the PSSCH by other terminal devices.

In the NR V2X system, in the Mode B, the terminal device autonomously selects the transmission resources for data transmission. Resource reservation is the prerequisite for the resource selection.

The resource reservation means that the terminal device sends the first sidelink control information in the PSCCH to reserve the resources to be used next. In the NR V2X system, the resource reservation within a Transport Block (TB) is supported, and the resource reservation between TBs is also supported.

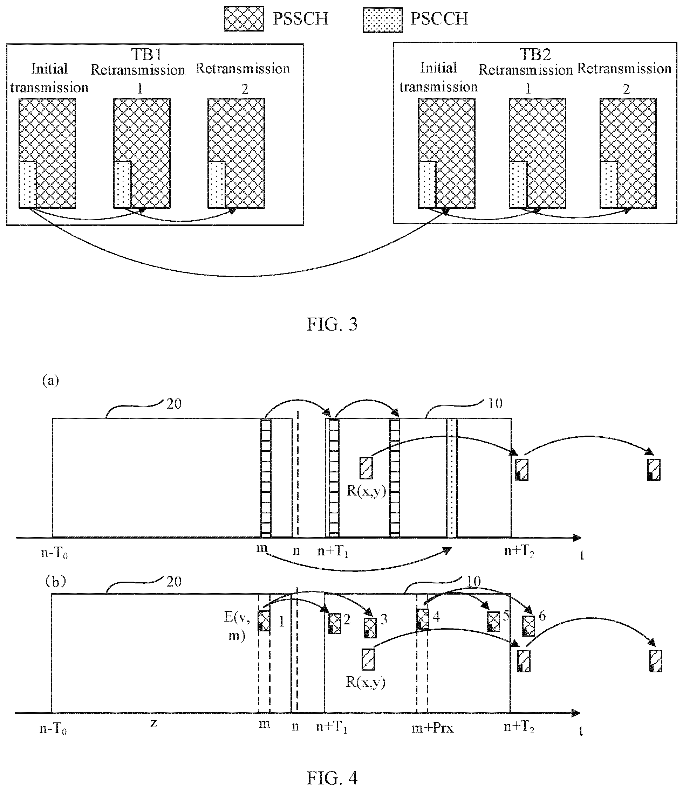

As illustrated in FIG. 3, the terminal device sends the first sidelink control information, and indicates N time-frequency resources of the current TB (including resources used for current transmission) by using a "Time resource assignment" field and a "Frequency resource assignment" field in the first sidelink control information. N≤Nmax, and in NR V2X, Nmax is equal to 2 or 3. In this case, the indicated N time-frequency resources should be distributed in W slots. In NR V2X, W is equal to 32. For example, in TB1 illustrated in FIG. 3, the terminal device sends the first sidelink control information in the PSCCH while the terminal device sends data of initial transmission in the PSSCH, and indicates time-frequency resource positions for the initial transmission and retransmission 1 (i.e., N=2 at this time) by using the above two fields, that is, the time-frequency resource for the retransmission 1 is reserved. Moreover, the initial transmission and retransmission 1 are distributed within 32 slots in the time domain. Similarly, in TB1 illustrated in FIG. 3, the terminal device indicates the time-frequency resource positions for the retransmission 1 and retransmission 2 by using the first sidelink control information transmitted in the PSCCH of the retransmission 1, and the retransmission 1 and the retransmission 2 are distributed within 32 slots in the time domain.

Besides, the terminal device uses a "Resource reservation period" field for the resource reservation between TBs when sending the first sidelink control information. For example, in FIG. 3, when sending the first sidelink control information for the initial transmission of TB1, the terminal device indicates the time-frequency resource positions for the initial transmission of TB1 and the retransmission 1 of TB1 by using the "Time resource assignment" field and "Frequency resource assignment" field, and the time-frequency resource positions are denoted as {(t1, f1), (t2, f2)}. Herein t1 and t2 represent positions of the initial transmission resource and retransmission 1 resource of TB1 in the time domain, and f1 and f2 represent the corresponding positions in the frequency domain. If a value of the "Resource reservation period" field is 100 milliseconds in the first sidelink control information, the Sidelink Control Information (SCI) simultaneously indicates time-frequency resources {(t1+100, f1), (t2+100, f2)}, and these two resources are used for transmission of the initial transmission and retransmission 1 of TB2. Similarly, in the first sidelink control information transmitted in retransmission 1 of TB1, the "Resource reservation period" field is also used to reserve the time-frequency resources for retransmission 1 and retransmission 2 of TB2. In NR V2X, possible values of the "Resource reservation period" field are 0 milliseconds (ms), 1-99 ms, 100 ms, 200ms, 300ms, 400 ms, 500 ms, 600 ms, 700 ms, 800 ms, 900 ms or 1000 ms, which is more flexible than that in Long Term Evolution (LTE) V2X. However, in each resource pool, only e values out of these possible values are configured, and the terminal device determines the value that may be used according to the resource pool that is used. The e values in the resource pool configuration are denoted as a resource reservation period set M. In an example, e is less than or equal to 16.

In addition, through configuration by the network or pre-configuration, the inter-TB reservation can be activated or deactivated in unit of resource pool. When the inter-TB reservation is deactivated, the "Resource reservation period" field is not included in the first sidelink control information. Generally, before the resource reselection is triggered, the values of the "Resource reservation period" field used by the terminal device (i.e., the resource reservation period) would not change, and every time the terminal device sends the first sidelink control information, it uses the "Resource reservation period" field in the first sidelink control information to reserve the resources in the next period for the transmission of another TB, so as to implement periodic semi-persistent transmission.

When the terminal device operates in Mode B, the terminal device can obtain the first sidelink control information sent by other terminal devices by sensing the PSCCH sent by other terminal devices, so as to know the resources reserved by other terminal devices. When the terminal device performs resource selection, it will exclude the resources reserved by other terminal devices so as to avoid resource collision.

In the NR V2X system, the terminal device needs to autonomously select resources in the above Mode B.

As illustrated in FIG. 4, the terminal device triggers resource selection or resource reselection in slot n, or slot n is a slot where the higher layer triggers a physical layer to report a candidate resource set. A resource selection window starts at n+T1 and ends at n+T2. 0<=T1<=T_{proc,1.} When a subcarrier interval is 15kHz, 30kHz, 60kHz, and 120kHz, T_{proc,1} is 3 slots, 5 slots, 9 slots, and 17 slots, respectively. T₂ₘᵢₙ <=T2<= residual delay budget of service. A set of values of T₂ₘᵢₙ is {1, 5, 10, 20}* 2^{µ} slots, where µ=0, 1, 2, 3 respectively corresponding to the cases where the subcarrier interval is 15kHz, 30kHz, 60kHz, and 120kHz. The terminal device determines T₂ₘᵢₙ from the set of values according to a priority of data to be transmitted by the terminal device. For example, when the subcarrier interval is 15kHz, the terminal device determines T₂ₘᵢₙ from the set {1, 5, 10, 20} according to the priority of data to be transmitted by the terminal device. When T₂ₘᵢₙ is greater than or equal to the residual delay budget of service, T2 is equal to the residual delay budget of service. The residual delay budget is a difference between a moment corresponding to a data delay requirement and a current moment. For example, for a packet arriving at slot n, the delay requirement is 50 ms, assuming that a slot is 1 ms long, if the current moment is slot n, the residual delay budget will be 50 ms, and if the current time is slot n+20, the residual delay budget will be 30 ms.

The terminal device performs resource sensing from n-T₀ to n-T_{proc,0} (not including n-T_{proc,0}), and the value of T₀ is 100 ms or 1100 ms. When the subcarrier interval is 15kHz, 30kHz, 60kHz, and 120kHz, T_{proc,0} is 1 slot, 1 slot, 2 slots, and 4 slots, respectively. Actually, the terminal device would sense the first sidelink control information sent by other terminal devices in each slot (except its own transmission slot). When the resource selection or the resource reselection is triggered at slot n, the terminal device uses results of the resource sensing from n-T₀ to n-T_{proc,0}.

In Step 1, the terminal device takes all available resources belonging to the resource pool used by the terminal device in the resource selection window 10 as a resource set A. Any resource in the set A is denoted as R(x,y), where x and y respectively indicate a frequency-domain position and time-domain position of the resource. An initial number of resources in the set A is denoted as Mₜₒₜₐₗ. The terminal device performs resource exclusion on the resources in the resource set A according to a slot not being sensed in a resource sensing window 20 (Step 1-1) and/or a result of the resource sensing in the resource sensing window 20 (Step 1-2). The terminal device determines whether the resource R(x,y) or a series of periodic resources corresponding to the resource R(x,y) overlaps with a slot determined according to the un-sensed slot in Step 1-1 or a resource determined according to the sensed first sidelink control information in Step 1-2, and if there is an overlap, the resource R(x,y) is excluded from the resource set A.

In Step 1-1, if the terminal device sends data at slot m in the resource sensing window 20 and does not performs sensing, the terminal device would determine corresponding Q slots based on the slot m and each allowable resource reservation period in the resource pool used by the terminal device by taking the resource reservation period as an interval. If the Q slots overlap with the resource R(x,y) or with the series of periodic resources corresponding to the resource R(x,y), the resource R(x,y) is excluded from the resource set A. Q=1 or $Q = \left⌈{T}_{scal}/Prx\right⌉$ (representing rounding up). T_{scal} is a value in millisecond converted from T₂. Prx is one of the resource reservation periods allowed by the resource pool used by the terminal device.

For example, as illustrated in the subfigure (a) in FIG. 4, the terminal device does not perform sensing at slot m, the resource exclusion is performed sequentially according to each resource reservation period in the resource reservation period set M in the resource pool configuration used by the terminal device. For a certain resource reservation period 1, assuming that the value of Q is calculated to be 2, the corresponding Q slots are the next two slots mapped from the slot m with the resource reservation period 1 as the interval, and the next two slots are marked with horizontal line shading in the subfigure (a) of FIG. 4. For a certain resource reservation period 2, assuming that the value of Q is calculated to be 1, the corresponding Q slot is one slot mapped from the slot m with the resource reservation period 2 as the interval, and this slot is marked with dot shading in the subfigure (a) of FIG. 4.

The terminal device will determine whether the Q slots corresponding to each reservation period overlap with the resource R(x,y) or the series of periodic resources corresponding to the resource R(x,y), and if there is an overlap, it will exclude the resource R(x,y) from the resource set A.

Optionally, the terminal device may not perform the above Step 1-1 when the inter-TB reservation is deactivated in the resource pool used by the terminal device. Optionally, after Step 1-1 is performed, if the resources remaining in the resource set A is less than Mₜₒₜₐₗ*X%, the resource set A is initialized to be all available resources belonging to the resource pool used by the terminal device, and then Step 1-2 is performed.

In Step 1-2, if the first sidelink control information transmitted in the PSCCH is sensed by the terminal device in slot m in the resource sensing window 20, a Sidelink Reference Signal Received Power (SL-RSRP) of the PSCCH is measured, or a SL-RSRP of a PSSCH scheduled by the PSCCH (i.e., the SL-RSRP of the PSSCH transmitted in the same slot as the PSCCH) is measured.

If the measured SL-RSRP is greater than a SL-RSRP threshold, and the inter-TB resource reservation is activated in the resource pool used by the terminal device, the terminal device would determine the corresponding Q slots based on the slot m and the resource reservation period carried in the sensed first sidelink control information by taking the resource reservation period as an interval. The terminal device assumes that the first sidelink control information having the same content are also received in the Q slots. The terminal device will determine whether the resources indicated by the "Time resource assignment" field and the "Frequency resource assignment" field in the first sidelink control information received in the slot m and in the Q pieces of first sidelink control information that are assumed to be received overlap with the resource R(x,y) or the series of periodic resources corresponding to the resource R(x,y). If there is an overlap, the corresponding resource R(x,y) is excluded from the set A. Q=1 or $Q = \left⌈{T}_{scal}/Prx\right⌉$ (representing rounding up). T_{scal} is a value in millisecond converted from T2. Prx is a resource reservation period carried in the sensed first sidelink control information.

For example, as illustrated in subfigure (b) in FIG. 4, when the inter-TB reservation is activated in the resource pool used by the terminal device, if the first sidelink control information in the PSCCH is sensed by the terminal device on the resource E(v,m) of the slot m, the resource reservation period in the first sidelink control information is Prx, and it is assumed that the value of Q is calculated to be 1, the terminal device would assume that the first sidelink control information having the same content is also received in slot m+Prx. The terminal device would determine whether resource 1, resource 2, resource 3, resource 4, resource 5 and resource 6 indicated by the "Time resource assignment" field and "Frequency resource assignment" field in the first sidelink control information received at slot m and in the first sidelink control information that is assumed to be received at slot m+Prx overlap with the resource R(x,y) or the series of periodic resources corresponding to the resource R(x,y). If there is an overlap and the Reference Signal Received Power (RSRP) condition is satisfied, the resource R(x,y) is excluded from the resource set A.

If the SL-RSRP measured by the terminal device is greater than the SL-RSRP threshold and the inter-TB resource reservation is deactivated in the resource pool used by the terminal device, the terminal device only determines whether the resources indicated by the "Time resource assignment" field and "Frequency resource assignment" field in the first sidelink control information received in slot m overlap with the resource R(x,y) or the series of resources corresponding to the resource R(x,y). If there is an overlap, the resource R(x,y) is excluded from the resource set A.

For example, as illustrated in subfigure (b) in FIG. 4, when the inter-TB reservation is deactivated in the resource pool used by the terminal device, if the first sidelink control information in the PSCCH is sensed by the terminal device on the resource E(v,m) of slot m, the terminal device determines whether resource 1, resource 2 and resource 3 indicated by the "Time resource assignment" field and "Frequency resource assignment" field in the first sidelink control information overlap with the resource R(x,y) or the series of periodic resources corresponding to the resource R(x,y). If there is an overlap and the RSRP condition is satisfied, the resource R(x,y) is excluded from the resource set A.

If residual resources in the resource set A after the above resource exclusion are less than Mₜₒₜₐₗ*X%, the SL-RSRP threshold is raised by 3dB, and the Step 1 is performed again. The physical layer takes the resource set A subjected to the resource exclusion as a candidate resource set and reports the candidate resource set to the higher layer.

In Step 2, the higher layer randomly selects resources from the reported candidate resource set for data transmission. That is, the terminal device randomly selects resources from the candidate resource set to send data.

The following should be noted.
1. The RSRP threshold is determined by a priority P1 carried in the PSCCH sensed by the terminal device and a priority P2 of the data to be sent by the terminal device. The configuration of the resource pool used by the terminal device includes an SL-RSRP threshold table containing SL-RSRP thresholds corresponding to all combinations of the priorities. The configuration of the resource pool can be configured by the network or pre-configured.

For example, as illustrated in Table 1, it is assumed that the optional values of the priority P1 and the priority P2 are both 0-7, the SL-RSRP thresholds corresponding to different combinations of the priorities are represented by γᵢⱼ, where i in γᵢⱼ is a value of the priority P1 and j is a value of the priority P2.

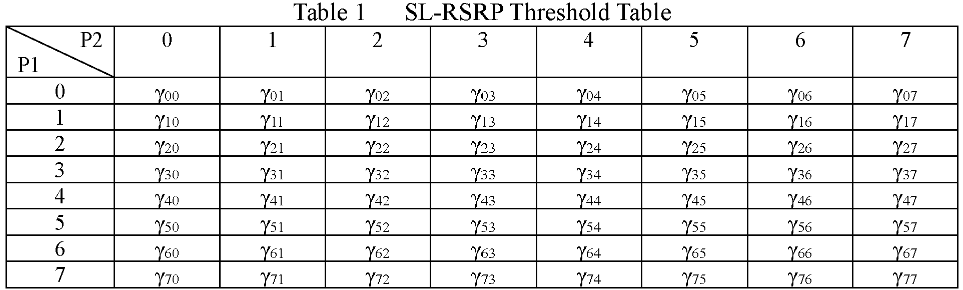

When a PSCCH sent by other terminal device is sensed by the terminal device, the terminal device acquires the priority P1 carried in the first sidelink control information transmitted in the PSCCH and the priority P2 of the data to be sent, and the terminal device determines the SL-RSRP threshold by looking up the Table 1.

2. Whether the measured PSCCH-RSRP or the PSSCH-RSRP scheduled by the PSCCH is used by the terminal device for comparison with the SL-RSRP threshold depends on the resource pool configuration of the resource pool used by the terminal device. The resource pool configuration can be configured by the network or pre-configured.

3. Possible values for X in X% mentioned above may be {20, 35, 50}. The configuration of the resource pool used by the terminal device includes correspondence between the priorities and the above possible values. The terminal device determines the value of X according to the priority of the data to be sent and the correspondence. The configuration of the resource pool can be configured by the network or pre-configured.

The above introduced is a SL communication mode in NR-V2X in which the terminal device autonomously selects transmission resources through resource sensing and performs data transmission on the sidelink by itself. This SL communication mode can also be applied to various SL communications such as direct communication between handheld terminals, and direct communication between pedestrians and vehicles.

In addition, in NR-V2X, it also supports re-evaluation on the resources that have been selected but have not been indicated by sending the first sidelink control information after the resource selection is completed.

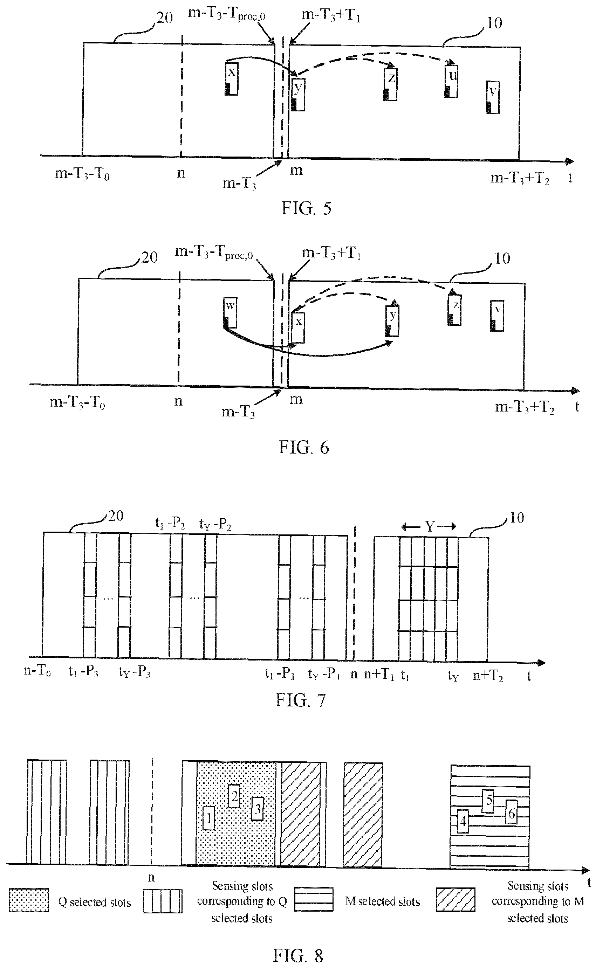

As shown in FIG. 5, resources x, y, z, u, and v are time-frequency resources that have been selected by the terminal device in slot n, and resource y is located in slot m. For resources z and u which are to be indicated for the first time by sending the first sidelink control information in resource y (resource y has been previously indicated by the first sidelink control information in resource x) by the terminal device, the terminal device performs the above Step 1 at least once in slot m-T₃, that is, the terminal device determines the resource selection window 10 and the resource sensing window 20 at least in slot m-T3 as above, and performs the above Step 1 to perform exclusion on the resources in the resource selection window 10 to obtain a candidate resource set. If resource z and/or resource u are not in the candidate resource set, the terminal device performs the above Step 2 to perform reselection for the time-frequency resources of resources z and u that are not in the candidate resource set. Depending on the implementation of the terminal device, the terminal device can also reselect any resource that has been selected but has not been indicated by sending the first sidelink control information, such as any one or more of resources z, u and v. The above T₃ is equal to T_{proc,1}. The dashed arrow in Figure 5 indicates that the indication is to be performed by sending the first sidelink control information, and the solid arrow indicates that the indication has been performed by sending the first sidelink control information.

In addition, NR-V2X also supports resource pre-emption mechanism. For a resource that has been selected by a first terminal device and has been indicated by sending the first sidelink control information, a second terminal device may pre-empt it. The conclusion about the resource pre-emption mechanism is described from the perspective of the preempted terminal, which is specifically as follows: after completing the resource selection, the terminal device still continues to sense the first sidelink control information, and if the resource that has been selected and has been indicated by sending the first sidelink control information meets the following three conditions, it indicates that the resource is preempted by another terminal device, and the terminal device triggers resource reselection for this resource. The three conditions include:
1. The resource indicated in the first sidelink control information that has been sensed overlaps with the resource that has been selected and indicated by the terminal device.
2. A SL-RSRP of a PSCCH corresponding to the first sidelink control information that has been sensed or a SL-RSRP of a PSSCH scheduled by the PSCCH is greater than a SL RSRP threshold.
3. A priority carried in the first sidelink control information that has been sensed is higher than a priority of the data to be sent by the terminal device. Alternatively, the priority carried in the first sidelink control information that has been sensed is higher than the priority of the data to be sent by the terminal device, and the priority carried in the first sidelink control information that has been sensed is higher than a threshold value U, where U depends on the configuration of the resource pool, and the resource pool can be configured by the network or preconfigured.

The first terminal device and the second terminal device are both devices with transmission functions in NR V2X. The first terminal device and the second terminal device are two different terminal devices.

As shown in FIG. 6, resources w, x, y, z, and v are time-frequency resources that have been selected by the terminal device in slot n, and resource x is located at slot m. For the resources x and y that are to be indicated by sending the first sidelink control information on resource x by the terminal device and that have been indicated by the first sidelink control information previously sent by the terminal device, the terminal device performs the above Step 1 at least once at slot m-T3, that is, the terminal device determines the resource selection window 10 and the resource sensing window 20 as described above at least at slot m-T3, and performs the above Step 1 to performs exclusion on the available resources in the resource selection window 10 to determine the candidate resource set. If resources x and/or y are not in the candidate resource set, it further determines whether they meet the above three conditions. If so, the terminal device performs Step 2 to perform reselection for time-frequency resources in resources x and y that meet the above three conditions. In addition, when resource reselection is triggered, depending on the terminal device implementations, the terminal device can reselect any resource that has been selected but has not been indicated by sending the first sidelink control information, such as any few resources in the resources z and v. The above T3 is equal to T_{proc,1.}

The above introduced is an SL communication method in NR-V2X, that is, the terminal device autonomously selects transmission resources through resource sensing and transmits data on the sidelink by itself. This SL communication method can also be applied to various SL communications such as direct communication between handheld terminals and direct communication between pedestrians and vehicles.

The method for the terminal device to autonomously select transmission resources through resource sensing introduced above does not take power consumption saving into consideration. A resource selection method through partial sensing is an energy-saving and power-saving resource selection method designed for power-sensitive terminals such as handheld terminals. This method mainly achieves the purpose of power saving by limiting the number of time units for the resource selection and the number of time units for the resource sensing.

Next, a resource selection algorithm through partial sensing is described with reference to FIG. 7. The terminal device determines corresponding sensing slots based on at least Y slots determined within the resource selection window 10 and the resource reservation period set M in the resource pool configuration or a subset of M. In resource selection, resource exclusion on the resources in the at least Y slots is performed based on at least a sensing result and/or an un-sensed slot in the above determined sensing slots. For example, for the specific exclusion process, reference can be made to the above Step 1. The resource is selected from the resources that are not excluded to send data.

For example, in FIG. 7, it is assumed that the terminal device determines a total of Y slots from t₁ to t_{y} within the resource selection window 10, and the resource reservation period set M in the configuration of the resource pool used by the terminal device includes periods P1, P2, and P3. The terminal device determines the sensing slots in the resource sensing window 20 to be t₁-P₁ to t_{y}-P₁, t₁-P₂ to t_{y}-P₂ and t₁-P₃ to t_{y}-P₃ according to each resource reservation period in the set M and the Y slots. That is, corresponding slots of the latest period that belong to the resource sensing window 20 are determined based on the Y slots and each resource reservation period. When the terminal device performs resource selection or reselection at slot n, it will perform exclusion on the resources in the above Y slots based on at least the sensing result and/or un-sensed slot in the slots determined within the resource sensing window 20, for example, by the exclusion according to Step 1, and finally selects resources from the remaining resources in the Y slots to send data.

Optionally, in addition to the above determined sensing slots, the terminal device can also perform continuous sensing in [n+T_{A}, n+T_{B}], for example, T_{B}=0, T_{A}=-32 slots, perform exclusion on the resources within the at least Y slots according to the sensing result and/or un-sensed slots within the determined sensing slots and [n+T_{A}, n+T_{B}], to obtain a candidate resource set, and select a transmission resource from the candidate resource set.

Optionally, the above partial sensing mechanism is suitable for periodic transmission. The position of slot n is predicted according to the period, then the resource selection window is determined, at least Y slots are determined from the resource selection window, and the corresponding sensing slots are determined based on the at least Y slots. The sensing is performed when time comes to the sensing slot, and the resource selection or reselection is triggered when time comes to the slot n, and the transmission resource is selected from the at least Y slots.

Optionally, the above at least Y slots may be continuous slots or discontinuous slots.

In LTE SL, the re-evaluation mechanism and pre-emption mechanism are not supported. That is, after the terminal device triggers resource selection or resource reselection in subframe n and selects resources based on partial sensing, it does not trigger resource reselection for the resources that have not been indicated by performing the re-evaluation mechanism or for the resources that have been indicated by performing the pre-emption mechanism. When the terminal device performs semi-persistent transmission or periodic transmission, after the terminal device completes the resource selection or reselection, generally, the terminal device will indicate the resources in the next period for use in transmission of another TB by using the resource reservation period field in each period. For example, in FIG. 8, resources 1, 2, and 3 are selected in subframe n based on partial sensing, and when transmission is performed in resources 1, 2, and 3, the resource reservation period field in the sidelink control information is used to indicate resources 4, 5, and 6 in the next period. When transmission is performed in resources 4, 5, and 6, the resource reservation period field is used to indicate the resources in the next period, such as resources 7, 8, and 9. The terminal device repeats this behavior until the next resource selection or reselection is triggered.

In NR SL, the re-evaluation mechanism and the pre-emption mechanism are supported. After the terminal device triggers resource selection or resource reselection at slot n and selects resources based on partial sensing, in the process of the re-evaluation mechanism performed for unindicated resources or the pre-emption mechanism performed for indicated resources, resource reselection may be triggered due to resource collision or the resource being preempted. When the terminal device performs semi-persistent transmission or periodic transmission, after the terminal device completes resource selection or reselection, generally, the terminal device uses the resource reservation period field in each period to indicate the resources in the next period for transmission of another TB. In each period, the terminal device can perform the re-evaluation mechanism on the unindicated resource and trigger resource reselection when a resource conflict occurs. The terminal device can also perform the pre-emption mechanism on the indicated resource and trigger resource reselection when the resource is preempted. Optionally, the re-evaluation or pre-emption mechanism can be activated or deactivated on a resource pool basis. For example, in FIG. 8, assuming that the pre-emption mechanism is activated in the resource pool used by the terminal device, Q slots in the resource selection window and the corresponding sensing slots are determined at slot n based on partial sensing, and resources 1, 2, and 3 are selected in the Q slots. When transmission is performed in resources 1, 2, and 3, the resource reservation period field in the first sidelink control information is used to indicate resources 4, 5, and 6 in the next period. In the period corresponding to resources 4, 5, and 6, since resources 4, 5, and 6 have been indicated by the first sidelink control information in the previous period, the terminal device will trigger the pre-emption mechanism for the resources that have been indicated, and if in the pre-emption mechanism, the terminal device finds that resource 4 has been preempted and the terminal device selects a new transmission resource, then for this new resource, the terminal device can also trigger the re-evaluation mechanism before it is indicated. Therefore, in the period corresponding to resources 4, 5, and 6, when the terminal device triggers the pre-emption mechanism and/or the re-evaluation mechanism, whether to determine the corresponding M selected slots and then perform resource reselection in these slots to select new resources, and if determined, whether there is a relationship with the Q selected slots determined in the previous period, and how to determine the corresponding sensing slots based on these M selected slots, all these are new issues in NR SL, and the corresponding issues are not standardized.

The technical solutions of the present disclosure will be described below by way of several embodiments.

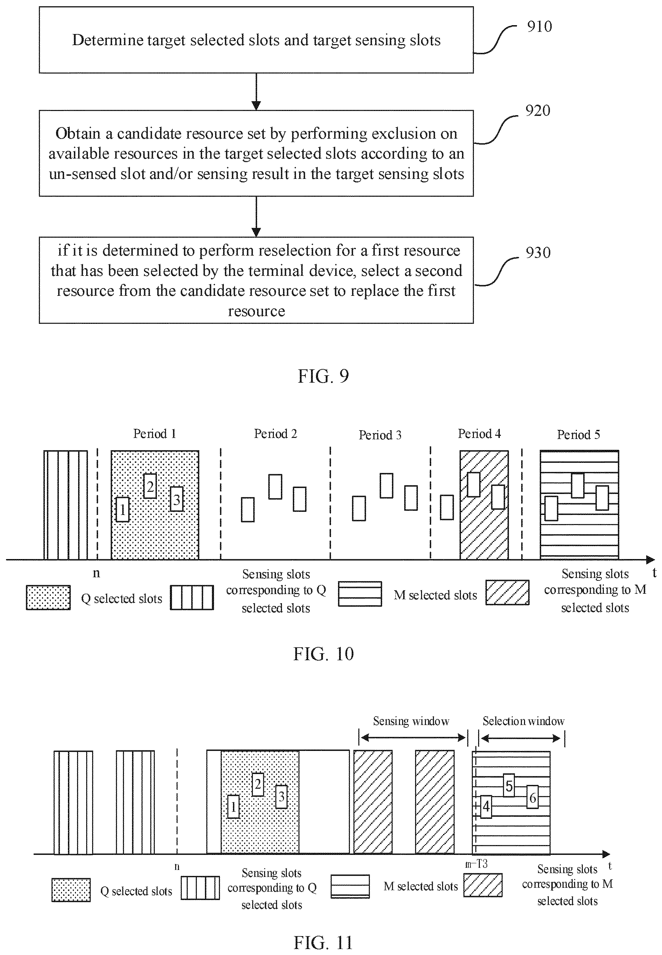

Referring to FIG. 9, it shows a flow chart of a resource reselection method provided by an embodiment of the present disclosure. This method can be applied to the network architecture shown in FIG. 1. For example, the method can be performed by a terminal device. The method may include the following steps (910~930).

In step 910, target selected slots and target sensing slots are determined.

The terminal device can be any terminal device. For example, in the present disclosure, the terminal device can serve as a transmitting end of SL communication in a V2X environment. For the resource reselection process, the terminal device first determines the target selected slots, and determines the target sensing slots based on the target selected slots. For example, the resource reselection process includes a resource reselection process triggered by a Re-evaluation mechanism and/or a resource reselection process triggered by a Pre-emption mechanism. Optionally, the terminal device may perform SL communication with one other terminal device or may perform SL communication with multiple other terminal devices.

Optionally, the resource reselection scheme provided by the embodiments of the present disclosure is applicable to the terminal device that performs partial sensing, and the terminal device performs semi-persistent transmission or periodic transmission.

The target selected slot and the target sensing slot refer to the selected slot and the sensing slot determined by the terminal device for the resource reselection process. In the situation where the terminal device performs partial sensing, the terminal device can first determine the target selected slots, and then determine the target sensing slots based on the target selected slots and the resource reservation period. Regarding how the target selected slot and target sensing slot are determined, please refer to the introduction below.

In step 920, a candidate resource set is obtained by performing resource exclusion on candidate resources in the target selected slots according to non-monitored slots and/or sensing result in the target sensing slots.

Illustratively, with reference to the resource exclusion process introduced above, the terminal device performs Step 1-1 to perform exclusion on the candidate resources in the target selected slots based on the slots being not monitored in the target sensing slots, and/or the terminal device performs Step 1-2 to perform exclusion on the candidate resources in the target selected slots based on the sensing result in the target sensing slots, to obtain a candidate resource set. The introduction of Step 1-1 and Step 1-2 can be found above and will not be repeated here.

In step 930, if it is determined to perform reselection for a first resource that has been selected by the terminal device, a second resource is selected from the candidate resource set to replace the first resource.

Optionally, for the first resource that has been selected by the terminal device, if the first resource is not in the candidate resource set, the terminal device determines to perform reselection for the first resource.

In an illustrative embodiment, in a case where the terminal device supports the Re-evaluation mechanism, if the first resource is not in the candidate resource set, the terminal device determines to perform reselection for the first resource.

In an illustrative embodiment, in a case where the terminal device supports the Pre-emption mechanism, if the first resource is not in the candidate resource set and the first resource meets the following three conditions, the terminal device determines to perform reselection for the first resource, the three conditions including:
1. A resource indicated in first sidelink control information that has been sensed overlaps with the first resource.
2. A signal quality (such as SL-RSRP) of a PSCCH corresponding to the sensed first sidelink control information or a signal quality (such as SL-RSRP) of a PSSCH scheduled by the PSCCH is greater than a threshold.
3. A priority carried in the first sidelink control information that has been sensed is higher than a priority of data to be sent by the terminal device. Alternatively, the priority carried in the first sidelink control information that has been sensed is higher than the priority of the data to be sent by the terminal device, and the priority carried in the first sidelink control information that has been sensed is higher than a threshold value U, where U depends on configuration of a resource pool, and the resource pool can be configured by the network or preconfigured. The data to be sent refers to the data to be sent through the first resource.

Optionally, the priority is represented by a priority numerical value. If a larger priority numerical value indicates a higher priority, the priority being higher than the threshold value U means that the priority numerical value is greater than the threshold value U; and if a smaller priority numerical value indicates a higher the priority, the priority being higher than the threshold value U means that the priority numerical value is smaller than the threshold value U.

The first resource may be any resource that has been selected by the terminal device. Optionally, the first resource is a selected resource after the first period since initial resource selection or initial resource reselection or resource selection or resource reselection. For example, the first resource is a selected resource for the second period (or the third period, the fourth period, etc.) after the initial resource selection or initial resource reselection or the resource selection or resource reselection. Optionally, the selected resource is a resource that has been selected and has not been indicated, or a resource that has been selected and has been indicated.

In an example, the first resource is a resource that has been selected and indicated by the terminal device. For example, in a case where the pre-emption mechanism is supported, the terminal device can perform resource reselection for the first resource that has been selected and indicated. In another example, the first resource is a resource that has been selected and has not been indicated by the terminal device. For example, in a case where the Re-evaluation mechanism is supported, the terminal device can perform resource reselection for the first resource that has been selected and has not been indicated..

Optionally, the first resource is a resource selected by the terminal device due to the initial resource selection or initial resource reselection or resource selection or resource reselection. The first resource may be a resource that has been selected by the terminal device but has not been indicated by sending the first sidelink control information, or may be a resource that has been selected by the terminal device and has been indicated by sending the first sidelink control information.

Optionally, the above initial resource selection or initial resource reselection or resource selection or resource reselection does not include resource reselection due to the Re-evaluation mechanism or the Pre-emption mechanism or abandonment of transmission. Optionally, the above initial resource selection or initial resource reselection or the resource selection or resource reselection performed by the terminal is not reselection for the selected resource.

Illustratively, the above initial resource selection or initial resource reselection or resource selection or resource reselection means the resource selection or resource reselection triggered when the terminal device maintains a counter, a value of the counter decreases to 0 and a random number generated by the terminal device within [0, 1] is less than or equal to P. Optionally, when the transmission of the terminal device corresponds to the last transmission of a Media Access Control Packet Data Unit (MAC PDU), the counter value is decremented by 1. In other words, in the last transmission corresponding to a MAC PDU, the terminal device decrements the counter value by 1. P is a value configured by the network or preconfigured, or a value depending on the implementation of the terminal device, or a value specified by the standard. Optionally, P is configured according to Radio Resource Control (RRC) signaling. Optionally, P is configured by a RRC layer.

Optionally, the initial resource selection or initial resource reselection or resource selection or resource reselection is predictable.

Optionally, the second resource is any resource in the candidate resource set. For example, the terminal device may randomly select a resource from the candidate resource set as the second resource. The second resource is used to replace the first resource. That is to say, data that would have needed to be transmitted through the first resource can be transmitted through the second resource.

In an illustrative embodiment, the target selected slots satisfy at least one of the following conditions.

Condition 1, the target selected slots include at least M slots, M is greater than or equal to D, and D is configured by the network or preconfigured, or is specified by the standard, or depends on the implementation of the terminal device. Optionally, D is included in the resource pool configuration.

Condition 2, the target selected slots are determined according to first selected slots, and the first selected slots include selected slots determined by the terminal device for the initial resource selection or initial resource reselection or resource selection or resource reselection.

In an example, the target selected slots are determined by adding the first selected slots and W times the period, where W is a positive integer. For example, the first selected slots and W times the period are added up, and the slots determined by the addition are the target selected slots.

In another example, the target selected slots include at least the slots determined by adding the first selected slots and W times the period, where W is a positive integer. For example, the first selected slots and W times the period are added up. The target selected slots include at least the slots determined by the addition, and optionally further include one or more other slots. The method for determining the other slots may depend on the implementation of the terminal device, which is not limited in the present disclosure.

Condition 3, the target selected slots are determined according to second selected slots, and the second selected slots include the selected slots determined by the terminal device for the previous period. Optionally, the second selected slots include the selected slots determined by the terminal device for transmission in the previous period, and information transmitted in the previous period includes, but is not limited to, at least one of the following: a TB, a MAC PDU, and data. Optionally, the second selected slots include the selected slots determined by the terminal device for performing the Pre-emption mechanism and/or the Re-evaluation mechanism in the previous period.

In an example, the target selected slots are determined by adding the second selected slots and the period. For example, the second selected slots and one period are added up, and the slots determined by this addition are the target selected slots.

In another example, the target selected slots include at least the slots determined by adding the second selected slot and the period. For example, the second selected slots and one period are added up. The target selected slots include at least the slots determined by this addition, and optionally further include one or more other slots. The method for determining the other slots may depend on the implementation of the terminal device, which is not limited in the present disclosure.

Condition 4, the target selected slots are determined according to third selected slots, and the third selected slots include the selected slots determined by the terminal device for the first period. The first period is the last period in which the terminal device determined selected slots.

In an example, the target selected slots are determined by adding the third selected slots and H times the period, where H is a positive integer. For example, the third selected slots and H times the period are added up, and the slots determined by this addition are the target selected slots. For example, if the first period is a period β, and it is determined that the period for the target selected slots is the period β+2, then H is 2.

In another example, the target selected slots include at least the slots determined by adding the third selected slots and H times the period, where H is a positive integer. For example, the third selected slots and H times the period are added up. The target selected slots include at least the slots determined by this addition, and optionally further include one or more other slots. The method for determining the other slots may depend on the implementation of the terminal device, which is not limited in the present disclosure.

According to the invention, the target selected slots are selected slots determined for the F-th period after the initial resource selection or initial resource reselection or resource selection or resource reselection, and F is greater than 1. That is to say, the resource reselection process provided by the embodiment is not for the first period after the initial resource selection or the initial resource reselection or the resource selection or the resource reselection, but is for the second period or the periods subsequent to the second period.

Optionally, the period mentioned above is a resource reservation period of the terminal device. Optionally, the period is indicated to a physical layer of the terminal device by a higher layer of the terminal device.

In an illustrative embodiment, the target sensing slots include at least one of the following:
1. At least one sensing slot determined based on the target selected slots and at least one resource reservation period; where the at least one resource reservation period includes all or part of the resource reservation periods in the resource reservation period set used by the terminal device.

Optionally, the at least one resource reservation period includes all or part of the resource reservation periods in the resource reservation period set in the resource pool used by the terminal device.

Optionally, for a slot S in the target selected slots, the sensing slot determined based on this slot S and at least one resource reservation period is slot S-R*Ps, where Ps is the at least one resource reservation period mentioned above, and R is a positive integer.

Optionally, the values of R corresponding to different resource reservation periods are the same; or there are at least two different resource reservation periods corresponding to different values of R.

Optionally, R is the minimum value that makes the sensing slot to be before a reference time point. The reference time point is determined based on a slot T, which is a slot with the earliest time domain position in the target selected slots. For example, for the resource reservation period Ps1, R=1 is the minimum value that makes S-R*Ps1 before the reference time point. For the resource reservation period Ps2, R=2 is the minimum value that makes S-R*Ps2 before the reference time point.

Optionally, there is a target resource selection period in the at least one resource reservation period, and the target resource selection period corresponds to multiple values of R. For example, if R=1 and R=2, the determined sensing slots are S-Ps and S-2*Ps. Optionally, the multiple values of R include the minimum value that makes the sensing slot before the reference time point.

2. At least one sensing slot from a second slot to a first slot determined based on the first slot in the target selected slots; where the second slot is located before the first slot.

In an example where the first slot is slot S and the second slot is slot S-W, the target sensing slots may be [S-W, S), (S-W, S), (S-W, S], or [S-W, S], where W is a positive integer. Optionally, W is 31 or 32. Optionally, W is a physical slot or a logical slot. Optionally, slot S is any slot in the target selected slots.

In addition, the physical slots are continuous slots in a time domain. For example, there are 10 physical slots between two resources, and these 10 physical slots must be located in a continuous period of time, but these 10 physical slots are not necessarily all used for data transmission, and may also be used for transmission of other information, such as a synchronization signal. Therefore, there may be only 5 slots out of these 10 physical slots that are used for data transmission by the terminal device. The logical slots are logically connected (having the same function), but actually there may be an interval between the slots. For example, there are 5 logical slots between two resources, these 5 logical slots may not be continuous, but they are all used for data transmission by the terminal device.

In an illustrative embodiment, the terminal device determines the resource selection window and the resource sensing window; and performs exclusion on the candidate resources in a second duration based on the non-monitored slots and/or sensing result in a first duration, to obtain a candidate resource set; where the first duration is an intersection of the resource sensing window and the target sensing slots, and the second duration is an intersection of the resource selection window and the target selected slots.

Optionally, the terminal device should determine the target selected slots within the resource selection window, and correspondingly, there are sensing results in the target sensing slots within the resource sensing window.

Optionally, the terminal device should sense the target sensing slots in the resource sensing window that correspond to the target selected slots in the resource selection window.

As shown in FIG. 10, the terminal device completes the initial resource selection or initial resource reselection or resource selection or resource reselection at slot n, and selects resources 1, 2, 3 and a series of periodic resources corresponding to resources 1, 2, 3. The terminal device can determine the selected slot and the corresponding sensing slot in each period after the initial resource selection or initial resource reselection or resource selection or resource reselection, and perform the Re-evaluation and/or Pre-emption mechanism. The terminal device can also determine the selected slot(s) and the corresponding sensing slot(s) in one or more specific periods, and perform the Re-evaluation and/or Pre-emption mechanism.

In a case where it is not in every period that the terminal device performs the Re-evaluation and/or Pre-emption mechanism, whether the terminal device performs or does not perform the Re-evaluation and/or Pre-emption mechanism in each period can be determined based on certain conditions. In an illustrative embodiment, the behaviors that the terminal device determines the target selected slots and the target sensing slots, and obtains a candidate resource set by performing exclusion on the candidate resources in the target selected slots based on the non-monitored slots and/or the sensing results in the target sensing slots are performed or not performed, depending on the configuration by the network device, or the pre-configuration, or the remaining power of the terminal device, or Hybrid Automatic Repeat reQuest (HARQ) feedback. That is, the terminal device performs or does not perform the Re-evaluation and/or Pre-emption mechanism according to the configuration by the network device, or the pre-configuration, or the remaining power of the terminal device, or the HARQ feedback. If the terminal device performs the Re-evaluation and/or Pre-emption mechanism in a specific period, it needs to determine the selected slot(s) and the sensing slot(s) corresponding to the selected slot(s) in this period.

Optionally, when the resource pool used by the terminal device allows the use of the random selection algorithm, the terminal device determines the selected slot(s) and the corresponding sensing slot(s) in each period, and performs the Re-evaluation and/or Pre-emption mechanism. The random selection algorithm refers to the algorithm for randomly selecting a resource, such as randomly selecting one or more resources from the resource selection window.

Optionally, in a case a configuration parameter θ is included in the configuration of the resource pool used by the terminal device, the terminal device determines the selected slot and the corresponding sensing slot in each period, and performs the Re-evaluation and/or Pre-emption mechanism. The configuration parameter θ represents a priority threshold. In some embodiments, the random resource selection can be performed in the resource pool for transmission services that have a priority higher than or equal to the priority threshold represented by the configuration parameter θ. In addition, the priority of the transmission service can be expressed as a numerical value. The priority of the transmission service being higher than or equal to the priority threshold represented by the configuration parameter θ may refer to that the value of the priority of the transmission service is greater than or equal to the configuration parameter θ, or may refer to that the value of the priority of the transmission service is less than or equal to the configuration parameter θ, which is not limited in the present disclosure.

Optionally, in a case where the resource pool configuration used by the terminal device includes a target parameter (such as parameter η), the terminal device determines the selected slot and the corresponding sensing slot in each period, and performs the Re-evaluation and/or Pre-emption mechanism. The target parameter (such as parameter η) is used to indicate the terminal device to determine the selected slot and the corresponding sensing slot in each period and perform the Re-evaluation and/or Pre-emption mechanism.

Optionally, in a case where the remaining power or energy of the terminal device is greater than or equal to a threshold α, the terminal device determines the selected slot and the corresponding sensing slot in each period, and performs the Re-evaluation and/or Pre-emption mechanism.

Optionally, the terminal device determines the selected slot and the corresponding sensing slot every Z periods, and performs the Re-evaluation and/or Pre-emption mechanism. Z is configured by the network device or preconfigured, or depends on the implementation of the terminal device. For example, Z is included in the resource pool configuration. For example, in FIG. 10, assuming that the configuration parameter Z in the resource pool configuration used by the terminal device is 4, the terminal device determines the selected slot and the corresponding sensing slot every 4 periods, and performs the Re-evaluation and/or Pre-emption mechanism.

Optionally, the terminal device determines whether to determine the selected slot and the corresponding sensing slot and perform the Re-evaluation and/or Pre-emption mechanism according to the received HARQ feedback information. For example, if the terminal device receives K consecutive NACKs, or receives NACKs in K consecutive periods, or does not receive ACK for K consecutive times, or does not receive ACK in K consecutive periods, the terminal device determines the selected slot(s) and the corresponding sensing slot(s) in the next one or more periods, and performs the Re-evaluation and/or Pre-emption mechanism, where K is a positive integer.

In the case where it is not in every period that the terminal device determines the selected slot and the corresponding sensing slot and perform the Re-evaluation and/or Pre-emption mechanism, the terminal device determines the target selected slots according to third selected slots, and the third selected slots include selected slots determined by the terminal device for the first period. The first period is the last period in which the terminal device determined selected slots. For example, in FIG. 10, the terminal device determines the selected slots and the corresponding sensing slots every 4 periods, and performs the Re-evaluation and/or Pre-emption mechanism. The terminal device determines the target selected slots in period 5 based on the selected slots determined in period 1. Optionally, the target selected slots in period 5 are the selected slots determined in period 1 plus 4 periods, and the period is the resource reservation period of the terminal device. Optionally, the target selected slots in period 5 include the selected slots determined in period 1 plus slots corresponding to 4 periods, and the period is the resource reservation period of the terminal device. Optionally, in FIG. 10, M is equal to Q, or M is greater than or equal to Q, ensuring that the terminal device can perform evaluation and reselection on the selected resource at any position when performing the Re-evaluation and/or Pre-emption mechanism.

Illustratively, the terminal device in the above embodiments is a terminal that performs semi-persistent transmission. Illustratively, the terminal device in the above embodiments is a terminal with resource sensing capability.

In summary, according to the technical solution provided by the embodiments of the present disclosure, when the terminal device performs partial sensing and performs semi-persistent transmission or periodic transmission, if it performs the pre-emption mechanism and determines that the resource is preempted, or it performs the re-evaluation mechanism and determines that there is resource collision, it triggers the resource reselection to avoid the resource collision, which improves communication reliability.

In addition, the terminal device can determine the selected slot(s) and the corresponding sensing slot(s) in each period after the initial resource selection or initial resource reselection or resource selection or resource reselection, and perform the Re-evaluation and/or Pre-emption mechanism. The terminal device can also determine the selected slot(s) and the corresponding sensing slot(s) in one or more specific periods and perform the Re-evaluation and/or Pre-emption mechanism for power saving of the terminal. Moreover, in each period, whether the terminal device performs or does not perform the Re-evaluation and/or Pre-emption mechanism can be determined based on certain conditions, which is more controllable and flexible.

In an illustrative embodiment, the terminal device determines Q selected slots and corresponding sensing slots for the initial resource selection or initial resource reselection or resource selection or resource reselection. For the second period after the initial resource selection or initial resource reselection or resource selection or resource reselection, M selected slots and corresponding sensing slots are determined. For any slot K among the Q selected slots, the terminal device adds the slot K and a period (such as the resource reservation period), and determines the slot after the addition as the slot within the M selected slots. M is greater than or equal to a parameter D in the resource pool configuration.

The terminal device determines that the slots corresponding to S-R*Ps and [S-W, S) are the sensing slots corresponding to the M selected slots. The slot S is any slot among the M selected slots, and Ps is each period in the resource reservation period set in the resource pool configuration used by the terminal device. For a specific resource reservation period Ps, R is the smallest positive integer that makes S-R*Ps to be before the reference time point. The reference time point is T-T_{proc,0}-T_{proc,1}. T is a slot with the earliest time domain position among the M selected slots. For T_{proc,0} and T_{proc,1}, please refer to the above introduction. W is 31 logical slots.

As shown in FIG. 11, the terminal device selects resources 1, 2, and 3 at slot n based on partial sensing, and indicates resources 4, 5, and 6 using the resource reservation period field in the first sidelink control information when sending resources 1, 2, and 3. The terminal device performs the Pre-emption mechanism on the target resources 4, 5, and 6 at m-T₃, the target resource 4 is located in slot m, and T₃ is T_{proc,1}. The terminal device determines the resource selection window and the resource sensing window, and performs exclusion on the candidate resources in the selected slots in the resource selection window based on the non-monitored slots and/or sensing results in the sensing slots in the resource sensing window to form a candidate resource set. For the specific process, please refer to Step 1 introduced above, the resource selection window introduced above is limited to the resource selected slots within the resource selection window, and the resource sensing window introduced above is limited to the resource sensing slots within the resource sensing window. If the target resource 4, 5 or 6 is not in the candidate resource set, it further determines whether it meets the following three conditions:
1. A resource indicated in first sidelink control information that has been sensed overlaps with the target resource.
2. A SL-RSRP of a PSCCH corresponding to the first sidelink control information that has been sensed or a SL-RSRP of a PSSCH scheduled by the PSCCH is greater than a SL RSRP threshold.
3. A priority carried in the first sidelink control information sensed is higher than a priority of data to be sent by the terminal device. Alternatively, the priority carried in the first sidelink control information sensed is higher than the priority of the data to be sent by the terminal device, and the priority carried in the first sidelink control information sensed is higher than a threshold value U, where U depends on the configuration of the resource pool, and the resource pool can be configured by the network or preconfigured. Optionally, the priority is represented by a priority numerical value. If a larger priority numerical value indicates a higher priority, the priority being higher than the threshold value U means that the priority numerical value is greater than the threshold value U; and if a smaller priority numerical value indicates a higher the priority, the priority being higher than the threshold value U means that the priority numerical value is smaller than the threshold value U.

If the above three conditions are all met, reselection from the candidate resource set will be performed for the resource meeting all the above three conditions among the target resources 4, 5, and 6, that is, reselection from the remaining resources that are not excluded in the selected slots. Optionally, depending on the implementation of the terminal device, the terminal device may also reselect any one or more unindicated resources from the candidate resource set.

In another illustrative embodiment, the terminal device determines Q selected slots and corresponding sensing slots for the initial resource selection or initial resource reselection or resource selection or resource reselection. For the second period after the initial resource selection or initial resource reselection or resource selection or resource reselection, M selected slots and corresponding sensing slots are determined. For any slot K among the Q selected slots, the terminal device adds the slot K and the period (such as the resource reservation period), and determines the slot obtained from the addition as a slot within the M selected slots. M is greater than or equal to a parameter D in the resource pool configuration.

The terminal device determines that the slots corresponding to S-R*Ps and [S-W, S) are the sensing slots corresponding to the M selected slots. The slot S is any slot among the M selected slots, and Ps is each period in the resource reservation period set in the resource pool configuration used by the terminal device. For a specific resource reservation period Ps, R is the smallest positive integer that makes S-R*Ps to be before the reference time point. The reference time point is T-T_{proc,0}-T_{proc,1}. T is a slot with the earliest time domain position among the M selected slots. For T_{proc,0} and T_{proc,1}, please refer to the background. W is 31 logical slots.

As shown in FIG. 11, the terminal device selects resources 1, 2, and 3 at slot n based on partial sensing. When sending resource 1, it gives up transmission on resource 1 due to confliction with uplink service, and when sending resources 2 and 3, it indicates resources 5 and 6 using the resource reservation period field in the first sidelink control information. The terminal device performs the Re-evaluation mechanism on target resource 4 at m-T₃, the target resource 4 is located in slot m, and T₃ is T_{proc,1}. The terminal device determines the resource selection window and the resource sensing window, and performs exclusion on the resources in the selected slots in the resource selection window based on the un-sensed slot and/or the sensing results in the sensing slots in the resource sensing window, to form the candidate resources set. For the specific process, please refer to Step 1 introduced above, the resource selection window introduced above is limited to the selected slots within the resource selection window, and the resource sensing window introduced above is limited to the sensing slots within the resource sensing window. If the target resource 4 is not in the candidate resource set, the terminal device performs reselection for the target resource 4 from the candidate resource set, that is, from the remaining resources that are not excluded in the selected slots. Optionally, depending on the implementation of the terminal device, the terminal device may also reselect any one or more unindicated time-frequency resource from the candidate resource set.

Those described below are apparatus embodiments of the present disclosure, which can be used to implement the method embodiments of the present disclosure. For details not disclosed in the apparatus embodiments of the present disclosure, reference can be made to the method embodiments of the present disclosure.

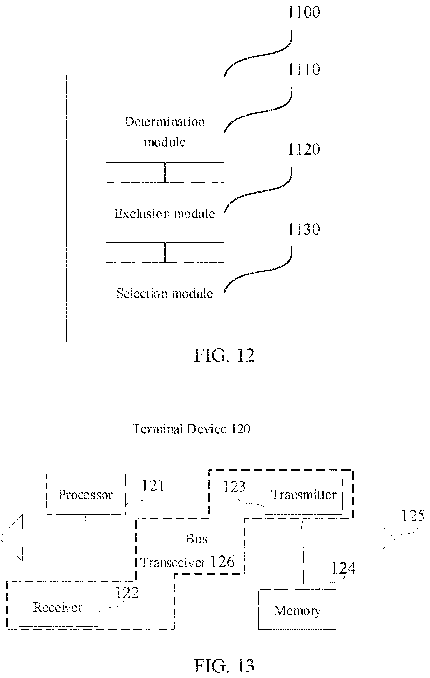

Please refer to FIG. 12, which shows a block diagram of a resource reselection apparatus provided by an embodiment of the present disclosure. The apparatus has the function of implementing the above method examples, and the function can be implemented by hardware, or can be implemented by hardware executing corresponding software. The apparatus can be the terminal device introduced above, or can be provided on the terminal device. As shown in FIG. 12, the apparatus 1100 may include a determination module 1110, an exclusion module 1120 and a selection module 1130.

The determination module 1110 is configured to determine target selected slots and target sensing slots.

The exclusion module 1120 is configured to obtain a candidate resource set by performing resource exclusion on candidate resources in the target selected slots according to non-monitored and/or sensing result in the target sensing slots.

The selection module 1130 is configured to select a second resource from the candidate resource set for replacement of a first resource in a case where it is determined to perform reselection for the first resource.

Optionally, the target selected slots satisfy at least one of the following conditions:
the target selected slots include at least M slots, where M is greater than or equal to D, and D is configured by a network, is preconfigured, is specified by the standard, or depends on the implementation of the terminal device;
the target selected slots are determined according to first selected slots, and the first selected slots include selected slots determined by the terminal device for initial resource selection or initial resource reselection or resource selection or resource reselection;
the target selected slots are determined according to second selected slots, the second selected slots include selected slots determined by the terminal device for the previous period; and
the target selected slots are determined according to third selected slots, the third selected slot include selected slots determined by the terminal device for the first period, and the first period is the last period in which the terminal device determined selected slots.

Optionally, the target selected slots are determined by addition of the first selected slots and W times the period; or, the target selected slots include at least the slots determined from the addition of the first selected slots and W times the period; where W is a positive integer.

Optionally, the target selected slots are determined by addition of the second selected slots and a period; or, the target selected slots include at least slots determined from the addition of the second selected slots and the period.

Optionally, the target selected slots are determined by addition of the third selected slots and H times the period; or, the target selected slots include at least the slots determined from the addition of the third selected slots and H times the period; where H is a positive integer.

Optionally, the period is a resource reservation period of the terminal device.

Optionally, the target selected slots are selected slots determined for the F-th period after the initial resource selection or initial resource reselection or resource selection or resource reselection, where F is greater than 1.

Optionally, the target sensing slots include at least one of the following:
at least one sensing slot determined based on the target selected slots and at least one resource reservation period; where the at least one resource reservation period includes all or a part of the resource reservation periods in the resource reservation period set used by the terminal device; and
at least one sensing slot from a second slot to a first slot determined based on the first slot in the target selected slots; where the second slot is located before the first slot.

Optionally, for a slot S in the target selected slots, the sensing slot determined based on the slot S and the at least one resource reservation period is slot S-R*Ps, where Ps is the at least one resource reservation period, and R is a positive integer.

Optionally, the values of R corresponding to different resource reservation periods are the same; or there are at least two different resource reservation periods corresponding to different values of R.

Optionally, R is the minimum value that makes the sensing slot to be before a reference time point. The reference time point is determined according to a slot T, and the slot T is a slot with the earliest time domain position in the target selected slots.

Optionally, there is a target resource selection period in the at least one resource reservation period, and the target resource selection period corresponds to multiple values of R.

Optionally, the first resource is a resource that has been indicated by the terminal device, or the first resource is a resource that has not been indicated by the terminal device.

Optionally, the determination module 1110 is further configured to determine a resource selection window and a resource sensing window.

The exclusion module 1120 is configured to perform exclusion on candidate resources in a second duration based on non-monitored slots and/or sensing results in a first duration to obtain a candidate resource set.

The first duration is an intersection of the resource sensing window and the target sensing slots, and the second duration is an intersection of the resource selection window and the target selected slots.

Optionally, the selection module 1130 is further configured to determine to perform reselection for the first resource in a case where the first resource is not located in the candidate resource set.

Optionally, the behaviors of determining the target selected slots and the target sensing slots and obtaining the candidate resource set by performing exclusion on the candidate resources in the target selected slots according to the non-monitored slots and/or sensing results in the target sensing slots are performed or not performed according to the configuration by the network, or pre-configuration, or the remaining power of the terminal, or HARQ feedback.

In summary, according to the technical solution provided by the embodiments of the present disclosure, when the terminal device performs partial sensing and performs semi-persistent transmission or periodic transmission, if it performs the pre-emption mechanism and determines that the resource is preempted, or it performs the re-evaluation mechanism and determines that there is resource collision, it triggers the resource reselection to avoid the resource collision, which improves communication reliability.

It should be noted that when the apparatuses provided in the above embodiments implement the functions thereof, the division of the above-mentioned functional modules is used only as an example for illustration, and in actual applications, the above-mentioned functions can be allocated to be performed by different functional modules according to actual needs. That is, the content structure of the device is divided into different functional modules to complete all or part of the functions described above.

Regarding the apparatus in the above embodiments, the specific manner in which each of the modules performs operation has been described in detail in the embodiments of the related methods, which will not be repeated here.

Please refer to FIG. 13, which shows a structural block diagram of a terminal device 120 provided by an embodiment of the present disclosure. The terminal device 120 may be configured to perform the above resource reselection method. Specifically, the terminal device 120 may include a processor 121, a receiver 122, a transmitter 123, a memory 124 and a bus 125.

The processor 121 includes one or more processing cores, and the processor 121 executes various functional applications and information processing by running software programs and modules.

The receiver 122 and the transmitter 123 can be implemented as a transceiver 126, and the transceiver 126 can be a communication chip.

The memory 124 is connected to the processor 121 through the bus 125.

The memory 124 may be configured to store a computer program, and the processor 121 is configured to execute the computer program to implement the steps performed by the terminal device in the foregoing method embodiments.

In addition, the memory 124 can be implemented by any type of volatile or nonvolatile storage device or a combination thereof, and the volatile or nonvolatile storage device includes but is not limited to: a Random-Access Memory (RAM) and a Read-Only Memory (ROM), a Erasable Programmable Read-Only Memory (EPROM), a Electrically Erasable Programmable Read-Only Memory (EEPROM ), a flash memory or other solid-state memory technologies, a Compact Disc Read-Only Memory (CD-ROM), a Digital Video Disc (DVD) or other optical storage, tape cartridges, tapes, disks storage or other magnetic storage devices.

In an illustrative embodiment, the processor 121 is configured to:
determine target selected slots and target sensing slots;
obtain a candidate resource set by performing resource exclusion on candidate resources in the target selected slots according to non-monitored slots and/or sensing result in the target sensing slots; and
select a second resource from the candidate resource set for replacement of a first resource that has been selected by the terminal device in a case where it is determined to perform reselection for the first resource.

Optionally, the target selected slots satisfy at least one of the following conditions:
the target selected slots include at least M slots, where M is greater than or equal to D, and D is configured by a network, is preconfigured, is specified by the standard, or depends on the implementation of the terminal device;
the target selected slots are determined according to first selected slots, and the first selected slots include selected slots determined by the terminal device for initial resource selection or initial resource reselection or resource selection or resource reselection;
the target selected slots are determined according to second selected slots, and the second selected slots include selected slots determined by the terminal device for the previous period; and
the target selected slots are determined according to third selected slots, the third selected slots include selected slots determined by the terminal device for the first period, and the first period is the last period in which the terminal device determined selected slots.

Optionally, the target selected slots are determined by addition of the first selected slots and W times the period; or, the target selected slots include at least slots determined from the addition of the first selected slots and W times the period; where W is a positive integer.

Optionally, the target selected slots are determined by addition of the second selected slots and a period; or, the target selected slots include at least slots determined from the addition of the second selected slots and the period.

Optionally, the target selected slots are determined by addition of the third selected slots and H times the period; or, the target selected slots include at least slots determined from the addition of the third selected slots and H times the period; where H is a positive integer.

Optionally, the period is a resource reservation period of the terminal device.

Optionally, the target selected slots are selected slots determined for the F-th period after the initial resource selection or initial resource reselection or resource selection or resource reselection, where F is greater than 1.

Optionally, the target sensing slots include at least one of the following:
at least one sensing slot determined based on the target selected slots and at least one resource reservation period; where the at least one resource reservation period includes all or a part of resource reservation periods in a resource reservation period set used by the terminal device; and
at least one sensing slot from a second slot to a first slot determined based on the first slot in the target selected slots; where the second slot is located before the first slot.

Optionally, for a slot S in the target selected slots, the sensing slot determined based on the slot S and the at least one resource reservation period is slot S-R*Ps, where Ps is the at least one resource reservation period, and R is a positive integer.

Optionally, the values of R corresponding to different resource reservation periods are the same; or there are at least two different resource reservation periods corresponding to different values of R.

Optionally, R is the minimum value that makes the sensing slot to be before a reference time point. The reference time point is determined according to a slot T, and the slot T is a slot with the earliest time domain position in the target selected slots.

Optionally, there is a target resource selection period in the at least one resource reservation period, and the target resource selection period corresponds to multiple values of R.

Optionally, the first resource is a resource that has been indicated by the terminal device, or the first resource is a resource that has not been indicated by the terminal device.

Optionally, the processor 121 is further configured to:
determine a resource selection window and a resource sensing window;
obtain the candidate resource set by performing exclusion on candidate resources in a second duration based on non-monitored slot and/or sensing results in a first duration;
where the first duration is an intersection of the resource sensing window and the target sensing slots, and the second duration is an intersection of the resource selection window and the target selected slots.

Optionally, the processor 121 is further configured to determine to perform reselection for the first resource in a case where the first resource is not in the candidate resource set.

Optionally, the behaviors of determining the target selected slots and the target sensing slots and obtaining the candidate resource set by performing exclusion on the candidate resources in the target selected slots according to the non-monitored slots and/or sensing results in the target sensing slots are performed or not performed according to the configuration by the network, or pre-configuration, or the remaining power of the terminal, or HARQ feedback.

For details that are not described in detail in the above embodiments, please refer to the introduction in the above method embodiments, which will not be repeated here.

The embodiments of the present disclosure also provide a computer-readable storage medium having stored therein a computer program, and the computer program is configured to be executed by a processor of a terminal device to implement the above resource reselection method.

Optionally, the computer-readable storage medium may include a Read-Only Memory (ROM), a Random-Access Memory (RAM), a Solid State Drives (SSD), an optical disc, or the like. The random access memory may include a Resistance Random Access Memory (ReRAM) and a Dynamic Random Access Memory (DRAM).

The embodiments of the present disclosure also provide a chip, which includes programmable logic circuits and/or program instructions configured to implement the above resource reselection method when the chip is running on a terminal device.

The embodiments of the present disclosure also provide a computer program product or computer program, the computer program product or computer program includes computer instructions stored in a computer-readable storage medium, and a processor of a terminal device reads and executes the computer instructions from the computer-readable storage medium to implement the above resource reselection method.

It should be understood that "indicate" mentioned in the embodiments of the present disclosure may be a direct indication or an indirect indication, or may represent an associated relationship. For example, if A indicates B, it may represent that A directly indicates B, for example, B can be obtained from A; or it may represent that A indicates B indirectly, for example, A indicates C, and B can be obtained from C; or it may represent that there is an associated relationship between A and B.

In the description of the embodiments of the present disclosure, the term "corresponding" may indicate that there is a direct or indirect corresponding relationship between two objects, or may indicate that there is an associated relationship, a relationship of indicating and being indicated, or a relationship of configuring and being configured between the two objects, and so on.

The expression "a plurality" mentioned herein means two or more. "And/or" describes the association relationship of the associated objects, indicating that there can be three types of relationships. For example, A and/or B may refers to three cases where A exists alone, A and B exist at the same time, and B exists alone. The character "/" generally indicates that the related objects before and after this character are in an "or" relationship.

In addition, the numbers of the steps described herein only exemplarily illustrate a possible performing order of the steps. In some other embodiments, the above steps may not be performed according to the order of the numbers, for example, two steps with different numbers are performed at the same time, or two steps with different numbers are performed in a reverse order as that shown in the illustration, which is not limited in the embodiments of the present disclosure.

Those skilled in the art can recognize that, in the foregoing one or more examples, the functions described in the embodiments of the present disclosure may be implemented by hardware, software, firmware or any combination thereof. When implemented in software, the functions may be stored on a computer-readable medium or transmitted as one or more instructions or codes over the computer-readable medium. The computer-readable medium includes both a computer storage medium and a communication media including any medium that facilitates transfer of a computer program from one place to another. The storage media may be any available medium that can be accessed by a general purpose or special purpose computer.

Those described above are only illustrative embodiments of the present disclosure, and are not intended to limit the present disclosure.

## Claims

1. A resource reselection method, wherein the method is performed by a terminal device, and the method comprises:
determining (910) target selected slots and target sensing slots, wherein the target selected slots are determined according to first selected slots, and the first selected slots comprise selected slots determined by the terminal device for initial resource selection or initial resource reselection or resource selection or resource reselection;
obtaining (920) a candidate resource set by performing resource exclusion on candidate resources in the target selected slots according to non-monitored slots and/or sensing result in the target sensing slots; and
in a case where it is determined to perform reselection for a first resource that has been selected by the terminal device, selecting (930) a second resource from the candidate resource set for replacement of the first resource,
wherein the target selected slots are selected slots determined for the F-th period after initial resource selection or initial resource reselection or resource selection or resource reselection, F being greater than 1, and the period is a resource reservation period of the terminal device.

2. The method according to claim 1, wherein the target selected slots further satisfy at least one of the following conditions:
the target selected slots comprise at least M slots, wherein M is greater than or equal to D, and D is configured by a network, is preconfigured, is specified by a standard, or depends on an implementation of the terminal device;
the target selected slots are determined according to second selected slots, wherein the second selected slots comprise selected slots determined by the terminal device for a previous period; and
the target selected slots are determined according to third selected slots, wherein the third selected slots comprise selected slots determined by the terminal device for a first period, and the first period is the last period in which the terminal device determined selected slots.

3. The method according to claim 2, wherein,
the target selected slots are determined by adding the second selected slots and the period; or
the target selected slots comprise at least the slots determined by adding the second selected slots and the period.

4. The method according to any one of claims 1 to 3, wherein the target sensing slots comprise at least one of the following:
at least one sensing slot determined based on the target selected slots and at least one resource reservation period; wherein the at least one resource reservation period comprises all or a part of resource reservation periods in a resource reservation period set used by the terminal device; and
at least one sensing slot that starts from a second slot and ends in a first slot in the target selected slots; wherein the second slot is located before the first slot.

5. The method according to claim 4, wherein, for a slot S in the target selected slots, the sensing slot determined based on the slot S and the at least one resource reservation period is slot S-R*Ps, Ps is the at least one resource reservation period, and R is a positive integer.

6. The method according to claim 5, wherein,
different resource reservation periods correspond to the same value of R; or
there are at least two different resource reservation periods corresponding to different values of R.

7. The method according to claim 5 or 6, wherein R is the minimum value that makes the sensing slot to be before a reference time point, the reference time point is determined according to a slot T, and the slot T is a slot with the earliest time domain position in the target selected slots.

8. The method according to any one of claims 5 to 7, wherein there is a target resource selection period in the at least one resource reservation period, and the target resource selection period corresponds to multiple values of R.

9. The method according to any one of claims 1 to 8, wherein the first resource is a resource that has been indicated by the terminal device, or the first resource is a resource that has not been indicated by the terminal device.

10. The method according to any one of claims 1 to 9, wherein after obtaining the candidate resource set by performing exclusion on the candidate resources in the target selected slots according to the non-monitored slots and/or sensing result in the target sensing slots, the method further comprises:
in a case where the first resource is not in the candidate resource set, determining to perform reselection for the first resource.

11. The method according to claim 10, wherein in a case where the first resource is not in the candidate resource set, determining to perform reselection for the first resource comprises:
in a case where the terminal device supports Re-evaluation mechanism and the first resource is not in the candidate resource set, determining to perform reselection for the first resource, or
in a case where the terminal device supports Pre-emption mechanism, the first resource is not in the candidate resource set and the first resource meets predetermines conditions, determining to perform reselection for the first resource, wherein the predetermines conditions comprises:
a resource indicated in first sidelink control information that is sensed overlaps with the first resource;
a signal quality of a Physical Sidelink Control Channel, PSCCH, corresponding to the sensed first sidelink control information or a signal quality of a Physical Sidelink Shared Channel, PSSCH, scheduled by the PSCCH is greater than a threshold; and
a priority carried in the first sidelink control information that is sensed is higher than a priority of data to be sent by the terminal device, or the priority carried in the first sidelink control information that is sensed is higher than the priority of the data to be sent by the terminal device and is higher than a threshold value.

12. A terminal device (120), comprising a processor (121) and a memory (124) having stored therein a computer program, wherein the processor executes the computer program to cause the terminal device (120) to implement the resource reselection method according to any one of claims 1 to 11.

## Patentansprüche

1. Verfahren zur Ressourcenneuauswahl, wobei das Verfahren von einem Endgerät ausgeführt wird und das Verfahren umfasst:
Bestimmen (910) von Ziel-ausgewählten Slots und Ziel-Erfassungs-Slots, wobei die Ziel-ausgewählten Slots gemäß ersten ausgewählten Slots bestimmt werden und die ersten ausgewählten Slots ausgewählte Slots umfassen, die von dem Endgerät für eine anfängliche Ressourcenauswahl oder eine anfängliche Ressourcenneuauswahl oder eine Ressourcenauswahl oder eine Ressourcenneuauswahl bestimmt werden;
Erhalten (920) eines Kandidatenressourcensatzes durch Durchführen eines Ressourcenausschlusses an Kandidatenressourcen in den Ziel-ausgewählten Slots gemäß nicht überwachten Slots und/oder einem Erfassungsergebnis in den Ziel-Erfassungs-Slots; und
in einem Fall, in dem bestimmt wird, eine Neuauswahl für eine erste Ressource durchzuführen, die von dem Endgerät ausgewählt wurde, Auswählen (930) einer zweiten Ressource aus dem Kandidatenressourcensatz zum Ersatz der ersten Ressource,
wobei die Ziel-ausgewählten Slots ausgewählte Slots sind, die für die F-te Periode nach einer anfänglichen Ressourcenauswahl oder einer anfänglichen Ressourcenneuauswahl oder einer Ressourcenauswahl oder einer Ressourcenneuauswahl bestimmt werden, wobei F größer als 1 ist, und die Periode eine Ressourcenreservierungsperiode des Endgeräts ist.

2. Verfahren nach Anspruch 1, wobei die Ziel-ausgewählten Slots ferner mindestens eine der folgenden Bedingungen erfüllen:
die Ziel-ausgewählten Slots umfassen mindestens M Slots, wobei M größer als oder gleich D ist und D durch ein Netzwerk konfiguriert ist, vorkonfiguriert ist, durch einen Standard spezifiziert ist oder von einer Implementierung des Endgeräts abhängt;
die Ziel-ausgewählten Slots werden gemäß zweiten ausgewählten Slots bestimmt, wobei die zweiten ausgewählten Slots ausgewählte Slots umfassen, die von dem Endgerät für eine vorherige Periode bestimmt werden; und
die Ziel-ausgewählten Slots werden gemäß dritten ausgewählten Slots bestimmt, wobei die dritten ausgewählten Slots ausgewählte Slots umfassen, die von dem Endgerät für eine erste Periode bestimmt werden, und die erste Periode die letzte Periode ist, in der das Endgerät ausgewählte Slots bestimmt hat.

3. Verfahren nach Anspruch 2, wobei
die Ziel-ausgewählten Slots durch Addieren der zweiten ausgewählten Slots und der Periode bestimmt werden; oder
die Ziel-ausgewählten Slots mindestens die Slots umfassen, die durch Addieren der zweiten ausgewählten Slots und der Periode bestimmt werden.

4. Verfahren nach einem der Ansprüche 1 bis 3, wobei die Ziel-Erfassungs-Slots mindestens eines der Folgenden umfassen:
mindestens einen Erfassungs-Slot, der auf der Grundlage der Ziel-ausgewählten Slots und mindestens einer Ressourcenreservierungsperiode bestimmt wird; wobei die mindestens eine Ressourcenreservierungsperiode alle oder einen Teil von Ressourcenreservierungsperioden in einem von dem Endgerät verwendeten Ressourcenreservierungsperiodensatz umfasst; und
mindestens einen Erfassungs-Slot, der von einem zweiten Slot ausgeht und an einem ersten Slot in den Ziel-ausgewählten Slots endet; wobei der zweite Slot vor dem ersten Slot liegt.

5. Verfahren nach Anspruch 4, wobei für einen Slot S in den Ziel-ausgewählten Slots der auf der Grundlage des Slots S und der mindestens einen Ressourcenreservierungsperiode bestimmte Erfassungs-Slot der Slot S-R*Ps ist, Ps die mindestens eine Ressourcenreservierungsperiode ist und R eine positive ganze Zahl ist.

6. Verfahren nach Anspruch 5, wobei
unterschiedliche Ressourcenreservierungsperioden dem gleichen Wert von R entsprechen; oder
es mindestens zwei unterschiedliche Ressourcenreservierungsperioden gibt, die unterschiedlichen Werten von R entsprechen.

7. Verfahren nach Anspruch 5 oder 6, wobei R der Mindestwert ist, der bewirkt, dass der Erfassungs-Slot vor einem Bezugszeitpunkt liegt, der Bezugszeitpunkt gemäß einem Slot T bestimmt wird und der Slot T ein Slot mit der frühesten Zeitbereichsposition in den Ziel-ausgewählten Slots ist.

8. Verfahren nach einem der Ansprüche 5 bis 7, wobei es eine Ziel-Ressourcenauswahlperiode in der mindestens einen Ressourcenreservierungsperiode gibt und die Ziel-Ressourcenauswahlperiode mehreren Werten von R entspricht.

9. Verfahren nach einem der Ansprüche 1 bis 8, wobei die erste Ressource eine Ressource ist, die von dem Endgerät angezeigt wurde, oder die erste Ressource eine Ressource ist, die von dem Endgerät nicht angezeigt wurde.

10. Verfahren nach einem der Ansprüche 1 bis 9, wobei nach dem Erhalten des Kandidatenressourcensatzes durch Durchführen eines Ausschlusses an den Kandidatenressourcen in den Ziel-ausgewählten Slots gemäß den nicht überwachten Slots und/oder dem Erfassungsergebnis in den Ziel-Erfassungs-Slots das Verfahren ferner umfasst:
in einem Fall, in dem die erste Ressource nicht in dem Kandidatenressourcensatz ist, Bestimmen, eine Neuauswahl für die erste Ressource durchzuführen.

11. Verfahren nach Anspruch 10, wobei in einem Fall, in dem die erste Ressource nicht in dem Kandidatenressourcensatz ist, das Bestimmen, eine Neuauswahl für die erste Ressource durchzuführen, umfasst:
in einem Fall, in dem das Endgerät einen Neubewertungsmechanismus unterstützt und die erste Ressource nicht in dem Kandidatenressourcensatz ist, Bestimmen, eine Neuauswahl für die erste Ressource durchzuführen, oder
in einem Fall, in dem das Endgerät einen Präemptionsmechanismus unterstützt, die erste Ressource nicht in dem Kandidatenressourcensatz ist und die erste Ressource vorbestimmte Bedingungen erfüllt, Bestimmen, eine Neuauswahl für die erste Ressource durchzuführen, wobei die vorbestimmten Bedingungen umfassen:
eine Ressource, die in ersten Sidelink-Steuerinformationen, die erfasst werden, angezeigt wird, mit der ersten Ressource überlappt;
eine Signalqualität eines physischen Sidelink-Steuerkanals, PSCCH, der den erfassten ersten Sidelink-Steuerinformationen entspricht, oder eine Signalqualität eines physischen gemeinsam genutzten Sidelink-Kanals, PSSCH, der durch den PSCCH geplant wird, größer als ein Schwellenwert ist; und
eine Priorität, die in den ersten Sidelink-Steuerinformationen, die erfasst werden, getragen wird, höher als eine Priorität von durch das Endgerät zu sendenden Daten ist, oder die Priorität, die in den ersten Sidelink-Steuerinformationen, die erfasst werden, getragen wird, höher als die Priorität der durch das Endgerät zu sendenden Daten ist und höher als ein Schwellenwert ist.

12. Endgerät (120), umfassend einen Prozessor (121) und einen Speicher (124), in dem ein Computerprogramm gespeichert ist, wobei der Prozessor das Computerprogramm ausführt, um das Endgerät (120) zu veranlassen, das Ressourcenneuauswahlverfahren nach einem der Ansprüche 1 bis 11 zu implementieren.

## Revendications

1. Procédé de re-sélection de ressources, dans lequel le procédé est exécuté par un dispositif terminal, et le procédé comprend :
déterminer (910) des créneaux sélectionnés cibles et des créneaux de détection cibles, dans lequel les créneaux sélectionnés cibles sont déterminés en fonction de premiers créneaux sélectionnés, et les premiers créneaux sélectionnés comprennent des créneaux sélectionnés déterminés par le dispositif terminal pour une sélection de ressources initiale ou une re-sélection de ressources initiale ou une sélection de ressources ou une re-sélection de ressources ;
obtenir (920) un ensemble de ressources candidates en effectuant une exclusion de ressources sur des ressources candidates dans les créneaux sélectionnés cibles en fonction de créneaux non surveillés et/ou d'un résultat de détection dans les créneaux de détection cibles ; et
dans un cas où il est déterminé d'effectuer une re-sélection pour une première ressource qui a été sélectionnée par le dispositif terminal, sélectionner (930) une seconde ressource dans l'ensemble de ressources candidates pour le remplacement de la première ressource,
dans lequel les créneaux sélectionnés cibles sont des créneaux sélectionnés déterminés pour la F-ième période après une sélection de ressources initiale ou une re-sélection de ressources initiale ou une sélection de ressources ou une re-sélection de ressources, F étant supérieur à 1, et la période est une période de réservation de ressources du dispositif terminal.

2. Procédé selon la revendication 1, dans lequel les créneaux sélectionnés cibles satisfont en outre à au moins une des conditions suivantes :
les créneaux sélectionnés cibles comprennent au moins M créneaux, dans lequel M est supérieur ou égal à D, et D est configuré par un réseau, est préconfiguré, est spécifié par une norme, ou dépend d'une implémentation du dispositif terminal ;
les créneaux sélectionnés cibles sont déterminés en fonction de deuxièmes créneaux sélectionnés, dans lequel les deuxièmes créneaux sélectionnés comprennent des créneaux sélectionnés déterminés par le dispositif terminal pour une période précédente ; et
les créneaux sélectionnés cibles sont déterminés en fonction de troisièmes créneaux sélectionnés, dans lequel les troisièmes créneaux sélectionnés comprennent des créneaux sélectionnés déterminés par le dispositif terminal pour une première période, et la première période est la dernière période dans laquelle le dispositif terminal a déterminé des créneaux sélectionnés.

3. Procédé selon la revendication 2, dans lequel,
les créneaux sélectionnés cibles sont déterminés en additionnant les deuxièmes créneaux sélectionnés et la période ; ou
les créneaux sélectionnés cibles comprennent au moins les créneaux déterminés en additionnant les deuxièmes créneaux sélectionnés et la période.

4. Procédé selon l'une quelconque des revendications 1 à 3, dans lequel les créneaux de détection cibles comprennent au moins un des éléments suivants :
au moins un créneau de détection déterminé sur la base des créneaux sélectionnés cibles et d'au moins une période de réservation de ressources ; dans lequel l'au moins une période de réservation de ressources comprend la totalité ou une partie de périodes de réservation de ressources dans un ensemble de périodes de réservation de ressources utilisé par le dispositif terminal ; et
au moins un créneau de détection qui commence à partir d'un deuxième créneau et se termine à un premier créneau dans les créneaux sélectionnés cibles ; dans lequel le deuxième créneau est situé avant le premier créneau.

5. Procédé selon la revendication 4, dans lequel, pour un créneau S dans les créneaux sélectionnés cibles, le créneau de détection déterminé sur la base du créneau S et de l'au moins une période de réservation de ressources est le créneau S-R*Ps, Ps est l'au moins une période de réservation de ressources, et R est un entier positif.

6. Procédé selon la revendication 5, dans lequel,
différentes périodes de réservation de ressources correspondent à la même valeur de R ; ou
il existe au moins deux périodes de réservation de ressources différentes correspondant à différentes valeurs de R.

7. Procédé selon la revendication 5 ou 6, dans lequel R est la valeur minimale qui fait que le créneau de détection est avant un point temporel de référence, le point temporel de référence est déterminé en fonction d'un créneau T, et le créneau T est un créneau ayant la position dans le domaine temporel la plus précoce dans les créneaux sélectionnés cibles.

8. Procédé selon l'une quelconque des revendications 5 à 7, dans lequel il existe une période de sélection de ressources cible dans l'au moins une période de réservation de ressources, et la période de sélection de ressources cible correspond à de multiples valeurs de R.

9. Procédé selon l'une quelconque des revendications 1 à 8, dans lequel la première ressource est une ressource qui a été indiquée par le dispositif terminal, ou la première ressource est une ressource qui n'a pas été indiquée par le dispositif terminal.

10. Procédé selon l'une quelconque des revendications 1 à 9, dans lequel, après l'obtention de l'ensemble de ressources candidates en effectuant une exclusion sur les ressources candidates dans les créneaux sélectionnés cibles en fonction des créneaux non surveillés et/ou du résultat de détection dans les créneaux de détection cibles, le procédé comprend en outre :
dans un cas où la première ressource n'est pas dans l'ensemble de ressources candidates, déterminer d'effectuer une re-sélection pour la première ressource.

11. Procédé selon la revendication 10, dans lequel, dans un cas où la première ressource n'est pas dans l'ensemble de ressources candidates, déterminer d'effectuer une re-sélection pour la première ressource comprend :
dans un cas où le dispositif terminal prend en charge un mécanisme de réévaluation et où la première ressource n'est pas dans l'ensemble de ressources candidates, déterminer d'effectuer une re-sélection pour la première ressource, ou
dans un cas où le dispositif terminal prend en charge un mécanisme de préemption, où la première ressource n'est pas dans l'ensemble de ressources candidates et où la première ressource satisfait à des conditions prédéterminées, déterminer d'effectuer une re-sélection pour la première ressource, dans lequel les conditions prédéterminées comprennent :
une ressource indiquée dans des premières informations de commande de liaison latérale qui sont détectées chevauche la première ressource ;
une qualité de signal d'un canal physique de commande de liaison latérale, PSCCH, correspondant aux premières informations de commande de liaison latérale détectées ou une qualité de signal d'un canal physique partagé de liaison latérale, PSSCH, programmé par le PSCCH est supérieure à un seuil ; et
une priorité portée dans les premières informations de commande de liaison latérale qui sont détectées est supérieure à une priorité de données à envoyer par le dispositif terminal, ou la priorité portée dans les premières informations de commande de liaison latérale qui sont détectées est supérieure à la priorité des données à envoyer par le dispositif terminal et est supérieure à une valeur seuil.

12. Dispositif terminal (120), comprenant un processeur (121) et une mémoire (124) dans laquelle est stocké un programme informatique, dans lequel le processeur exécute le programme informatique pour amener le dispositif terminal (120) à mettre en œuvre le procédé de re-sélection de ressources selon l'une quelconque des revendications 1 à 11.
